# EUROPÄISCHE PATENTANMELDUNG

(11) **EP 2 546 091 A1**
(43) Veröffentlichungstag der Anmeldung: **16.01.2013**
(21) Anmeldenummer: 11174210.2
(22) Anmeldetag: 15.07.2011
(51) Int. Cl.: B60L 11/18

(54) **Aufladeverfahren und Ladevorrichtung für einen Akkumulator eines Elektrofahrzeugs**

(71) Anmelder: SIEMENS AKTIENGESELLSCHAFT, 80333 München (DE)
(72) Erfinder: Schwesig, Günter, 91054 Erlangen (DE)

(57) **Zusammenfassung**

Die Erfindung betrifft ein Aufladeverfahren zum Aufladen eines Akkumulators (4) eines Elektrofahrzeugs (6) mit Hilfe eines Versorgungsnetzes (12), wobei ein Teil der vom Versorgungsnetz (12) abgegebenen elektrischen Energie in Nutzwärme umgewandelt wird, um damit die Temperatur im Akkumulator (4) zu regulieren.

## Beschreibung

Die Erfindung betrifft ein Aufladeverfahren zum Aufladen eines Akkumulators eines Elektrofahrzeugs mit Hilfe eines Versorgungsnetzes. Die Erfindung betrifft weiter eine Ladevorrichtung zum Aufladen eines Akkumulators eines Elektrofahrzeugs mit Hilfe eines Versorgungsnetzes.

In Elektrofahrzeugen für den Straßenverkehr kommen spezielle Akkumulatoren zum Einsatz, deren Weiterentwicklung derzeit mit einem hohen Aufwand vorangetrieben wird. Ziel ist es dabei unter anderem, die Effektivität der Akkumulatoren und damit schließlich auch die Effektivität der Elektrofahrzeuge zu steigern. Hierbei gilt es zu berücksichtigen, dass die vorherrschenden Bedingungen, unter denen ein entsprechender Akkumulator typischerweise genutzt wird, in der Regel nicht konstant sind, sondern stattdessen gewissen Schwankungen unterliegen. So muss beispielsweise ein Akkumulator für Elektrofahrzeuge in einem Temperaturbereich möglichst gut funktionieren, der dem zu erwartenden Außentemperaturbereich im vorgesehenen Einsatzgebiet entspricht.

Bei Akkumulatoren der aktuellen Generation besteht das Problem, dass mit abnehmender Temperatur der Innenwiderstand des Akkumulators steigt. Dementsprechend ist eine gewisse Mindesttemperatur, also eine Betriebstemperatur, notwendig, damit die volle Leistung, die der Akkumulator abzugeben vermag, auch abgerufen werden kann. Vor allem im Winter und insbesondere nachts liegt die Außentemperatur meist deutlich unterhalb der Betriebstemperatur, so dass erst nach einer gewissen Betriebsdauer des Elektrofahrzeugs, während dessen sich der Akkumulator durch die Eigenverlustleistung erwärmt, die volle Leistung des Akkumulators zu Verfügung steht.

Hiervon ausgehend liegt der Erfindung die Aufgabe zugrunde, ein Verfahren oder eine Vorrichtung anzugeben, mit dessen bzw. deren Hilfe ein Akkumulator eines Elektrofahrzeugs effektiver eingesetzt wird.

Bezüglich des Verfahrens wird diese Aufgabe erfindungsgemäß durch die Merkmale des Anspruchs 1 gelöst. Die rückbezogenen Ansprüche beinhalten teilweise vorteilhafte und teilweise für sich selbst erfinderische Weiterbildungen dieser Erfindung. Bezüglich der Vorrichtung wird diese Aufgabe sowohl durch die Merkmale des Anspruchs 9 als auch durch die Merkmale des Anspruchs 10 gelöst.

Das Aufladeverfahren dient zum Aufladen eines Akkumulators eines Elektrofahrzeugs mit Hilfe eines Versorgungsnetzes, wobei ein Teil der vom Versorgungsnetz abgegebenen elektrischen Energie in Nutzwärme umgewandelt wird, um damit die Temperatur im Akkumulator zu regulieren. Auf diese Weise wird der Akkumulator während des Aufladevorgangs auf Betriebstemperatur gebracht und nachfolgend auf Betriebstemperatur gehalten. Als Folge dieser Vortemperierung steht bei einem sich daran anschließenden Betrieb des Elektrofahrzeugs das volle Leistungsvermögen des Akkumulators unmittelbar, also ohne zeitliche Verzögerung, zur Verfügung. Die Nutzung des Akkumulators im Elektrofahrzeug erfolgt somit wesentlich effektiver.

Der Begriff Versorgungsnetz steht im Sinne der Anmeldung dabei stellvertretend für eine elektrische Energiequelle, wie sie dem Fachmann prinzipiell bekannt ist und zum Aufladen von Akkumulatoren von Elektrofahrzeugen genutzt wird. Dabei kann es sich beispielsweise um eine sogenannte Stromtankstelle handeln, die von einer Solaranlage gespeist wird, um eine Stromtankstelle, die als Schnellladestation ausgelegt und an ein Verbundnetz eines Energieversorgers angeschlossen ist, oder um eine einfache Steckdose, welche als Teil einer Gebäude-Elektroinstallation an ein Endverbraucher-Verteilernetz angeschlossen ist.

Exemplarisch sei an dieser Stelle angeführt, dass Elektrofahrzeuge typischerweise über Nacht aufgeladen und tagsüber genutzt werden. Gerade nachts sind je nach Wetterbedingung Temperaturen zu erwarten, die unterhalb der Betriebstemperatur des Akkumulators liegen, weswegen sich der Akkumulator in dieser Zeit bisher auf ein ungünstiges Temperaturniveau abkühlt. Gemäß dem Verfahren wird nunmehr der ohnehin vorgesehene Ladevorgang zusätzlich genutzt, um die Temperatur im Akkumulator auf einen Wert im Bereich der Betriebstemperatur des Akkumulators anzuheben und nachfolgend in diesem Bereich zu halten. Diese Temperaturregulierung wird dabei vorzugsweise auch dann fortgesetzt, wenn der eigentliche Ladevorgang des Akkumulators abgeschlossen ist, die elektrische Verbindung zwischen dem Elektroauto und dem Versorgungsnetz jedoch weiterhin besteht. Der Bediener des Elektrofahrzeugs wird die elektrische Verbindung in der Regel erst trennen, wenn er das Elektrofahrzeug in Betrieb zu nehmen gedenkt. Dementsprechend wird die Temperatur im Akkumulator bereits bei Beginn der Nutzung des Elektrofahrzeugs im Bereich der Betriebstemperatur liegen, so dass für das Elektrofahrzeug von Beginn an die volle Leistung des Akkumulators zur Verfügung steht.

In vorteilhafter Weiterbildung des Verfahrens wird ein Teil der Nutzwärme darüber hinaus zur Regulierung der Temperatur im Innenraum des Elektrofahrzeugs, insbesondere im Fahrgastraum, genutzt. Nach dem Stand der Technik erfolgt die Regulierung der Temperatur im Innenraum in Phasen, in denen ein Elektrofahrzeug nicht genutzt wird, mittels einer sogenannten Standheizung. Im Falle eines Elektrofahrzeugs wird der Energiebedarf für die Standheizung typischerweise durch Energie aus dem Akkumulator abgedeckt, wodurch die zur Verfügung stehende Energie für den Fahrbetrieb des Fahrzeugs reduziert wird. Bei dem hier vorgestellten Aufladeverfahren hingegen wird die Energie dem Versorgungsnetz entzogen und der Energievorrat im Akkumulator bleibt unangetastet.

In einer zweckmäßigen Verfahrensvariante wird hierbei zur Erzeugung der Nutzwärme ein einfacher Heizwiderstand oder eine Anordnung von Heizwiderständen eingesetzt.

Bevorzugt ist eine Verfahrensvariante vorgesehen, bei der zum Aufladen des Akkumulators ein Ladegerät eingesetzt und bei dem als Nutzwärme ein Teil der Verlustwärme des Ladegeräts genutzt wird. Mit Hilfe des Ladegeräts wird in an sich bekannter Weise die durch das Versorgungsnetz zur Verfügung stehende elektrische Energie in einen an den Akkumulator angepassten Ladestrom umgewandelt. Ein Teil der dem Versorgungsnetz entzogenen Energie wird dabei in thermische Energie umgewandelt und bisher als ungenutzte Abwärme an die Umgebung abgegeben. Nach dem hier vorgestellten Verfahren hingegen wird zumindest ein Teil dieser thermischen Energie als Nutzwärme zur Temperierung des Akkumulators und/oder zur Temperierung des Innenraums des Elektrofahrzeugs eingesetzt.

Zudem ist es zweckmäßig, das Ladegerät und den Akkumulator zu Gunsten einer thermischen Koppelung in räumlicher Nähe zueinander anzuordnen. Als räumliche Nähe wird hierbei ein Abstand zwischen dem Ladegerät und dem Akkumulator von wenigen Zentimetern betrachtet, wobei vorzugsweise ein Abstand kleiner 5cm vorgesehen ist. Eine derartige thermische Koppelung lässt sich besonders einfach und damit auch kostengünstig realisieren.

Einer weiteren zweckmäßigen Verfahrensvariante entsprechend wird alternativ oder ergänzend ein thermisch leitender Werkstoff zur Ausbildung der thermischen Koppelung zwischen Ladegerät und Akkumulator eingesetzt. Dazu wird mit Hilfe des thermisch leitenden Werkstoffes, z.B. eines Aluminiumkörpers, vorzugsweise eine Feststoffbrücke ausgebildet, welche einerseits in Kontakt mit dem Ladegerät und andererseits in Kontakt mit dem Akkumulator steht. Diese Form der thermischen Koppelung ist besonders effektiv und wird daher immer dann eingesetzt, wenn Wärme in größerem Umfang möglichst schnell umverteilt werden soll. Im hier vorliegenden Fall wird mit Hilfe der Feststoffbrücke erreicht, dass ein möglichst großer Anteil der Abwärme des Ladegeräts als Nutzwärme zum Akkumulator und/oder in den Fahrgastraum des Elektrofahrzeugs gelangt und das ein möglichst geringer Anteil der Abwärme ungenutzt an die Umgebung abgegeben wird.

Darüber hinaus ist eine Verfahrensvariante vorgesehen, bei der zum Transport der Nutzwärme ein gerichteter Luftstrom eingesetzt wird. Diese Variante ist insbesondere dann von Vorteil, wenn es beispielsweise aufgrund von fehlendem Bauraum nicht möglich ist, die Nutzwärme in räumlicher Nähe zum Akkumulator zu generieren, oder wenn eine Feststoffbrücke zur thermischen Koppelung aufgrund der zu überbrückenden räumlichen Distanz ein unerwünscht hohes Gewicht aufweisen würde. Zur Temperierung des Fahrgastinnenraums ist es dabei insbesondere vorgesehen, die Nutzwärme im Bereich eines Belüftungssystems des Elektrofahrzeugs zu generieren, so dass zur Ausbildung des gerichteten Luftstroms das ohnehin typischerweise vorgesehene Belüftungssystem eingesetzt wird.

Entsprechend einer weiteren Ausgestaltung des Verfahrens wird zum Transport der Nutzwärme ein gerichteter Flüssigkeitsstrom genutzt. Von Vorteil ist dabei unter anderem der Umstand, dass sich Flüssigkeiten, wie beispielsweise Wasser eignen, um auch größere Mengen an Wärme für längere Zeit zwischenzuspeichern. Zweckmäßig ist es hierbei, zum Transport und/ oder zur Zwischenspeicherung der Nutzwärme einen in der Regel ohnehin vorgesehenen Kühlkreislauf des Fahrzeugs einzusetzen. Auf diese Weise ist es nicht notwendig, ein zusätzliches System im Fahrzeug zu installieren, was die technische Umsetzung vereinfacht und die Kosten für die Umsetzung reduziert.

Ausführungsbeispiele der Erfindung werden nachfolgend anhand einer schematischen Zeichnung näher erläutert. Darin zeigen:
- FIG 1: in einer Blockschaltbilddarstellung eine Ladevorrichtung und
- FIG 2: in einer Blockschaltbilddarstellung eine alternative Ladevorrichtung.

Einander entsprechende Teile sind in allen Figuren mit den gleichen Bezugszeichen versehen.

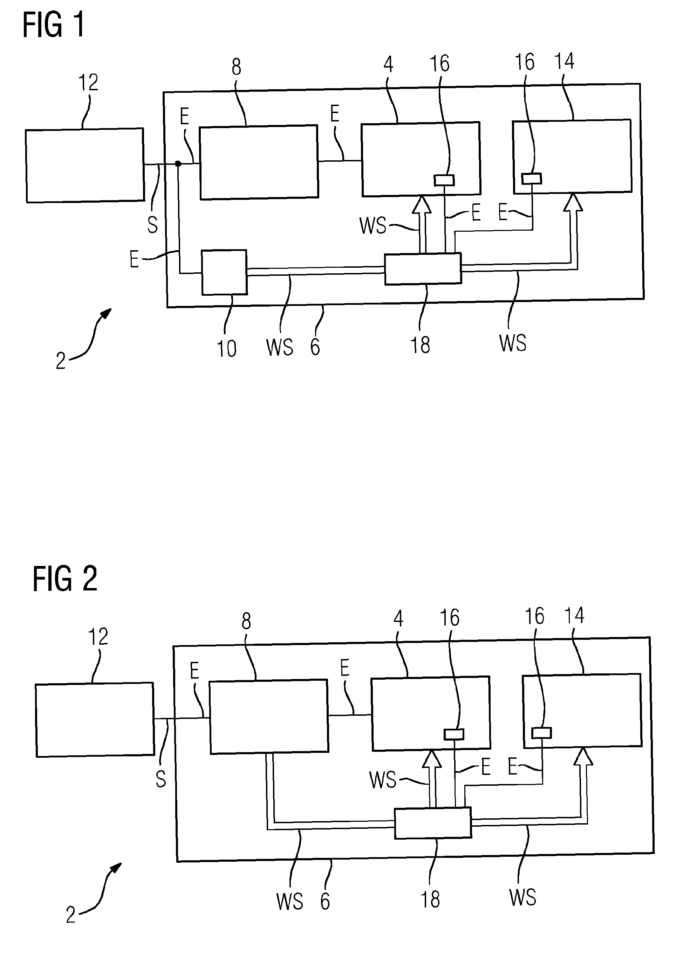

Die in FIG 1 schematisch dargestellte Ladevorrichtung 2 dient zur bedarfsweisen Aufladung eines Akkumulators 4 eines Elektrofahrzeugs 6. Hierzu umfasst die Ladevorrichtung 2 ein Ladegerät 8, welches im Elektrofahrzeug 6 angeordnet und mit dem Akkumulator 4 elektrisch leitend verbunden ist. Zusätzlich ist für die Ladevorrichtung 2 ein Heizwiderstand 10 in Form einer Glühwendel vorgesehen, welche in nicht näher dargestellter Weise in einen Belüftungsschacht des Elektrofahrzeugs 6 hineinragt.

Mittels einer einfachen Steckverbindung gemäß deutschem Schuco-Steckersystem Typ F CEE 7/4 wird die Ladevorrichtung 2 bei Bedarf von einem Bediener zum Beispiel in einer Garage mit einem Verteilernetz für Endverbraucher eines Energieversorgers verbunden, welches nachfolgend als Versorgungsnetz 12 für die Ladevorrichtung 2 und somit für das Elektrofahrzeug 6 genutzt wird.

Dementsprechend speist das Versorgungsnetz 12 das Ladegerät 8 und den Heizwiderstand 10 mit elektrischer Energie, so lange bis der Bediener die Steckverbindung S zum Verteilernetz wieder trennt. Auf der Basis der so zur Verfügung gestellten elektrischen Energie generiert das Ladegerät 8 nach an sich bekanntem Prinzip, also beispielsweise mit Hilfe einer einfachen Gleichrichterschaltung, einen an den Akkumulator 4 angepassten Ladestrom, mit dem der Akkumulator 4 über eine elektrische Verbindung E aufgeladen wird.

Während des Aufladevorgangs wird zudem elektrische Energie im Heizwiderstand 10 in thermische Energie, also Wärme, umgewandelt und in den Belüftungsschacht des Elektrofahrzeugs 6 eingekoppelt. Mit Hilfe eines Luftstroms wird die eingekoppelte Wärme als Nutzwärme in Richtung Akkumulator 4 und wahlweise zusätzlich in Richtung des Fahrgastraums 14 des Elektrofahrzeugs 6 transportiert. Die Wahl, ob ein Teil der am Heizwiderstand 10 generierten Nutzwärme zum Fahrgastraum 14 transportiert wird oder nicht, trifft dabei vorzugsweise der Bediener des Elektrofahrzeugs 6, indem dieser beispielsweise einen Schalter im Fahrgastraum 14 betätigt und so zwischen zwei möglichen Schalterstellungen hin und her wechselt.

Mittels des erwärmten Luftstroms wird in der Folge der Akkumulator 4 und soweit vom Bediener vorgesehen der Fahrgastraum 14 aufgeheizt. Der damit einhergehende Temperaturanstieg ist dabei bevorzugt derart reguliert, dass im Akkumulator 4 eine vom Hersteller des Akkumulators vorgesehene Betriebstemperatur erreicht und nachfolgend gehalten wird und dass im Fahrgastraum 14 eine vom Bediener vorgegebene Temperatur erreicht und nachfolgend gehalten wird. Hierzu sind im Akkumulator 4 einerseits und im Fahrgastraum 14 andererseits Temperatursensoren 16 positioniert, welche die Temperatur in ihrer unmittelbaren Umgebung überwachen und in Abhängigkeit der erfassten Temperatur ein Weichensystem 18 ansteuern, wobei beispielsweise beim Erreichen der jeweils zu haltenden Temperatur der Strom von warmer Luft hin zu dem vom jeweiligen Sensor überwachten Bereich unterbrochen wird. Die Unterbrechung wird dabei beispielsweise durch ein einfaches Verschließen des Lüftungskanals, der entweder zum Akkumulator 4 oder zum Fahrgastraum 14 führt, realisiert. Ist der entsprechende Lüftungsschacht verschlossen, so wird die Temperatur im entsprechenden Bereich wieder absinken und sich dem Niveau der Umgebungstemperatur, also der Außentemperatur, wieder annähern. Durch erneutes Öffnen des entsprechenden Lüftungsschachts erfolgt dann wieder das Aufheizen des entsprechenden Bereichs, wodurch eine Regulierung der Temperatur in diesem Bereich umgesetzt ist.

Eine weitere bevorzugte Ausführungsform der Ladevorrichtung 2 ist in FIG 2 skizziert. Hier umfasst die Ladevorrichtung 2 keinen separaten Heizwiderstand 10. Stattdessen wird die Abwärme des Ladegerätes 8, welche üblicherweise unvermeidbar ist, als Nutzwärme zur Regulierung der Temperatur im Akkumulator 4 und bedarfsweise zur Regulierung der Temperatur im Fahrgastraum 14 herangezogen. Die Regulierung der Temperatur sowohl im Akkumulator 4 als auch im Fahrgastraum 14 erfolgt dabei analog zum Ausführungsbeispiel aus FIG 1.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Aufladeverfahren zum Aufladen eines Akkumulators (4) eines Elektrofahrzeugs (6) mit Hilfe eines Versorgungsnetzes (12), **dadurch gekennzeichnet , dass** ein Teil der vom Versorgungsnetz (12) abgegebenen elektrischen Energie in Nutzwärme umgewandelt wird, um damit die Temperatur im Akkumulator (4) zu regulieren.

2. Aufladeverfahren nach Anspruch 1, **dadurch ge kennzeichnet** , dass ein Teil der Nutzwärme zur Regulierung der Temperatur im Innenraum (14) des Elektrofahrzeugs (6) genutzt wird.

3. Aufladeverfahren nach Anspruch 1 oder 2, **dadurch gekennzeichnet , dass** zur Erzeugung der Nutzwärme ein Heizwiderstand (10) eingesetzt wird.

4. Aufladeverfahren nach Anspruch 1 oder 2, **dadurch gekennzeichnet , dass** zum Aufladen des Akkumulators (4) ein Ladegerät (8) eingesetzt wird und dass als Nutzwärme ein Teil der Verlustwärme des Ladegerätes (8) genutzt wird.

5. Aufladeverfahren nach Anspruch 4, **dadurch gekennzeichnet , dass** das Ladegerät (8) und der Akkumulator (4) zum Zwecke einer thermischen Koppelung in räumlicher Nähe zueinander angeordnet werden.

6. Aufladeverfahren nach Anspruch 4 oder 5, **dadurch gekennzeichnet , dass** zur thermischen Koppelung von Ladegerät (8) und Akkumulator (4) ein thermisch leitender Werkstoff eingesetzt wird.

7. Aufladeverfahren nach einem der Ansprüche 1 bis 6, **dadurch gekennzeichnet , dass** zum Transport der Nutzwärme ein gerichteter Luftstrom eingesetzt wird.

8. Aufladeverfahren nach einem der Ansprüche 5 bis 8, **dadurchg ekennzeichnet** , dass zum Transport der Nutzwärme ein gerichteter Flüssigkeitsstrom eingesetzt wird.

9. Ladevorrichtung (2) für einen Akkumulator (4) eines Elektrofahrzeugs (6) mit einem Ladegerät (8) und Mitteln (16,18) zur Ausführung des Verfahrens nach einem der vorherigen Ansprüche.

10. Ladevorrichtung (2) für einen Akkumulator (4) eines Elektrofahrzeugs (6) mit einem Heizwiderstand (10) und Mitteln (16,18) zur Ausführung des Verfahrens nach einem der vorherigen Ansprüche.
